Europäisches Patentamt

(19) European Patent Office

Office européen des brevets

(11) Publication number: **0 110 231**
A2

# (12) EUROPEAN PATENT APPLICATION

(21) Application number: 83111387.3

(22) Date of filing: 14.11.83

(51) Int. Cl.³: **B 23 K 26/02**, G 02 B 27/17

(30) Priority: 29.11.82 IT 6838682

(43) Date of publication of application: 13.06.84
Bulletin 84/24

(84) Designated Contracting States: AT BE CH DE FR GB LI
NL SE

(71) Applicant: IVECO FIAT S.p.A., Via Puglia 35,
I-10156 Torino (IT)

(72) Inventor: Ferrari, Giancarlo, Via O. Vigliani, 160,
I-10100 Torino (IT)
Inventor: Pera, Luciano, Viale Lombardia, 3/4,
I-10048 Vinovo (Torino) (IT)

(74) Representative: Boggio, Luigi et al, c/o Ingg. Carlo e
Mario Torta Via Viotti, 9, I-10121 Torino (IT)

(54) Device for focusing and blending a laser beam.

(57) The present invention relates to a device (1) for focusing and blending a laser beam (2) on a work surface (3), the said device (1) comprising a pair of concave mirrors (8, 9), the first (8) of which reflects the incident laser beam towards the second (9) which, in turn, directs the beam (2) towards the said work surface. Furthermore, each mirror (8, 9) is turned by a respective motor (14, 15) round an axis other than the axis of symmetry of the mirror (8, 9) itself.

EP 0 110 231 A2

1

"DEVICE FOR FOCUSING AND BLENDING A LASER BEAM"

The present invention relates to a device for focusing and blending a power laser beam.

Industrial application of power lasers for welding, cutting and surface heat treating metals is known to require specially designed optics which differ from one another according to the laser application involved. For welding or cutting metals, for example, the laser beam must be focused so as to produce a light spot with the smallest possible cross section on the focusing surface for which fixed or good-quality static optical systems are preferably used.

When using a power laser for surface heat treating metals, on the other hand, the light spot on the focusing surface must not only conform with preset dimensions but also present an energy distribution pattern as uniform as possible. As a major drawback on a laser beam is precisely uneven distribution of energy within its cross section, heat treating applications have required the design of new optical arrangements, known as dynamic systems, for blending the energy of the beam on the focusing surface. The term "blending" is essentially intended to mean distributing the energy of the laser beam as evenly as possible over its cross section. A known method of doing this consists in turning the laser beam round its own propagation axis by setting rotary mirrors up asymmetrically along the beam propagation path. This, however, requires an optical focusing system upstream, to limit the dimension of the mirrors, as well as a focusing system downstream, to obtain a light spot of the required size. Furthermore, to avoid problems involving cooling of the mirrors, care must be taken not to overconcentrate the laser beam using the upstream focusing system.

The aim of the present invention is to provide a device for focusing and blending a laser beam, so as to overcome the drawbacks presented by the abovementioned known types.

With this aim in view, the present invention relates to a device for focusing and blending a laser beam, characterised by the fact that it comprises :

- at least a first and second mirror, each having a concave reflecting surface, the laser beam for focusing and blending being directed on to the said first mirror and reflected on to the said second mirror from which it is directed on to a work surface;

- drive means for turning each of the said mirrors round an axis other than the axis of symmetry of each of the said mirrors.

0110231

A preferred arrangement of the device covered by the present invention will now be described, by way of a non-limiting example, with reference to the attached drawings, in which :

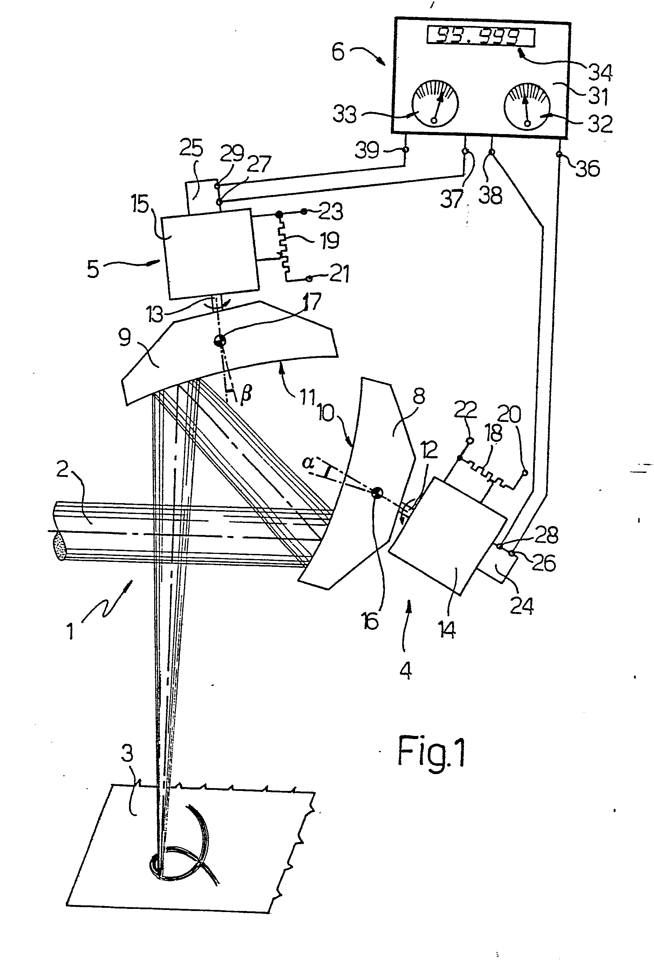

- Fig.1 shows a diagram of the focusing and blending device covered by the present invention;

- Fig.s 2, 3, 4 and 5 show a series of patterns produced by a laser beam on a focusing surface by adjusting a number of parameters on the Fig.1 device.

Number 1 in Fig.1 indicates a device for focusing and blending a laser beam (2) on a focusing surface (3). Device 1 essentially comprises two units (4, 5), for optical processing of beam 2, and a processing and display unit (6), connected to the said units 4 and 5. The latter are identical and each comprise a round mirror (8, 9), with a spherical, concave relfecting surface (10, 11), connected to the end of a shaft (12, 13) on an electric motor (14, 15) by means of an adjustable coupling (16, 17). The latter provides for adjusting the angle (a, B) of each mirror (8, 9) in relation to the axis of the corresponding shaft (12, 13). The speed of shaft 12, 13 on motor 14, 15 is regulated by means of a speed variator consisting of a rheostat (18, 19) with its supply terminals (20, 22 and 21, 23) connected to the negative and positive poles respectively of a d.c. supply source (not shown).

Each motor (14, 15) is assigned a speedometer dynamo (24, 25) the voltage at the terminals of which is proportional to the speed of the shaft on the respective motor. Each dynamo (24, 25) is fitted with output ter-

`0110231`

minals (26, 28 and 27, 29) each of which is connected to a respective terminal (36, 38 and 37, 39) on processing unit 6. The latter has a panel (31) fitted with two analogue indicators (32, 33) showing the rotation speed of the shaft on each motor (14, 15). Panel 31 is also fitted with a 7-section logic display (34) showing the ratio between the shaft rotation speeds on motors 14 and 15.

Fig.s 2 to 5 show patterns (42, 43, 44, 45) drawn by the end of beam 2 on work surface 3, depending on the said angles a and B.

Operation of device 1 is as follows.

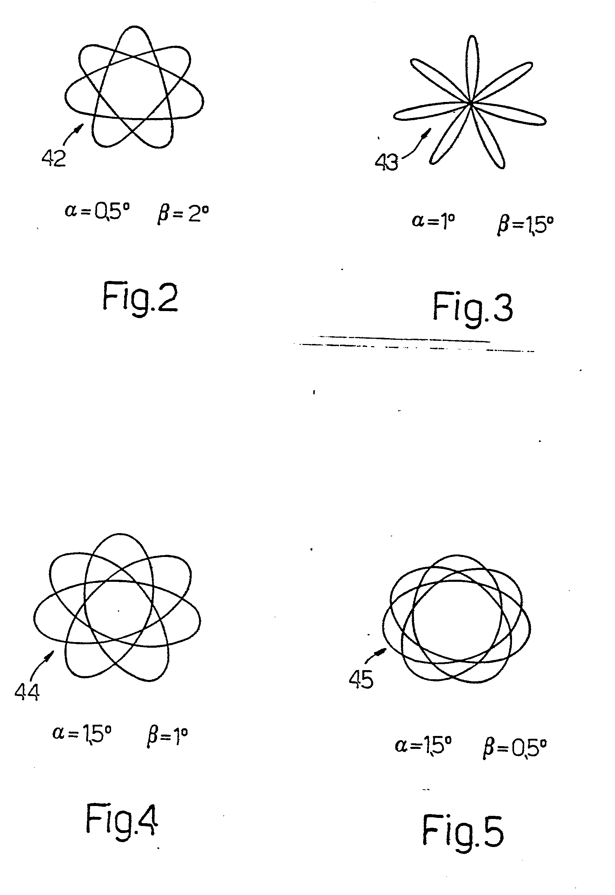

First of all, angles a and B are set by means of couplings 16 and 17. The size of the angle determines the size and, in part, the shape of the patterns described on the focusing surface by beam 2 (see Fig.s 2, 3, 4 and 5). The speed of shafts 12 and 13 on motors 14 and 15 is than set using the slides on rheostats 18 and 19, at the same time checking the indicators (32, 33 and 34) on unit 6. The speed the said shafts are set to determines the speed at which each pattern is drawn on the focusing surface, whereas the ratio between the said speeds determines the number of "petals" on each pattern. In our case, the said ratio is 0.75 for each of figures 2 to 5 which, as can be seen all have the same number of metals (7).

Once angles a and B and the speeds and ratio of shafts 12 and 13 have been set, device 1 is ready to operate. Laser beam 2, which is horizontal in Fig.1, is intercep ted by surface 10 on concave mirror 8 which provides for initial focusing and directing the beam towards surface 11 on concave mirror 9. On leaving the latter, laser beam 2 is further focuses and aimed finally towards the preset working area on surface 3.

Energy distribution on beam 2 is essentially uniform and covering a fairly wide area. The pattern described by beam 2 on surface 3 is determined by the combined motion produced by the rotation of mirrors 8 and 9, the actual design of the pattern being one of an essentially countless number produced by combining the various parameters on device 1.

The advantages of the present invention for focusing and blending a laser beam will be clear from the description given. Device 1, in fact, provides for easy, simultaneous focusing and blending of any type of laser beam with no need for the said focusing systems up- and downstream. What is more, device 1 is extremely cheap to produce on account of the fact that units 4 and 5 are not only identical but also simple in design. The fact that two separate motors are used for turning mirrors 8 and 9 makes device 1 extremely versatile, in that each of the patterns described by laser beam 2 on working surface 3 may be completed over widely differing lengths of time. Furthermore, any fluctuation in the speed of motors 14 and 15 merely determines an open pattern, instead of a closed one as shown in Fig.s 2 to 5, which only serves to improve the blending function of device 1 further.

To those skilled in the art it will be clear that changes can be made to the device (1) described by way of a non-limiting example, without, however, departing

from the scope of the present invention.

For example, either of units 4, 5 could be limited sole ly to the concave mirror and regulating coupling and, vice versa, the drive of the other unit motor using a suitable drive chain.

(Dr. Ing. BOGGIO Luigi)

## CLAIMS

1) - Device (1) for focusing and blending a laser beam (2), characterised by the fact that it comprises :
   - at least a first and second mirror (8, 9), each having a concave reflecting surface (10, 11), the laser beam for focusing and blending being directed on to the said first mirror (8) and reflected on to the said second mirror (9) from which it is directed on to a work surface (3);
   - drive means (14, 15) for turning each of the said mirrors (8, 9) round an axis other than the axis of symmetry of each of the said mirrors (14, 15).

2) - Device according to Claim 1, characterised by the fact that it comprises means for adjusting the angle of the said axes of rotation and symmetry.

3) - Device according to Claim 2, characterised by the fact that, for each of the said mirrors (8, 9), the said adjustment means comprise a coupling (16, 17) for connecting the said mirror (8, 9) to its respective drive means (14, 15).

4) - Device according to any of the foregoing Claims, characterised by the fact that the said drive means comprise at least one electric motor (14, 15) connected to one of the said mirrors (8, 9).

5) - Device according to Claim 4, characterised by the fact that it comprises means (18, 19) for regulating the speed of the said electric motor (14, 15).

6) - Device according to any of the foregoing Claims, characterised by the fact that it comprises means for generating electric signals proportional to the rotation speed of each of the said mirrors (8, 9).

7) - Device according to Claim 6 and depending on Claim 4 or 5, characterised by the fact that the said generating means consist of at least one speedometer dynamo (24, 25) powered by the said electric motor (14, 15).

8) - Device according to Claim 7, characterised by the fact that, for each of the said mirrors (8, 9), it comprises two separate control units (4, 5) each consisting of the said motor (14, 15), the said coupling (16, 17) and the said speedometer dynamo (24, 25).

9) - Device according to any of the foregoing Claims, characterised by the fact that it comprises a processing and indicator unit (6) showing the rotation speed of and/or the ratio between the said mirrors.

10) - Device according to Claim 9, depending on Claim 7 or 8, characterised by the fact that the said processing and indicator unit (6) has inputs for receiving signals generated by the said speedometer dynamos (24, 25).

(Dr. Ing. BOGGIO Luigi)

Fig.1

$\alpha = 0.5°$    $\beta = 2°$

Fig.2

$\alpha = 1°$    $\beta = 1.5°$

Fig.3

$\alpha = 1.5°$    $\beta = 1°$

Fig.4

$\alpha = 1.5°$    $\beta = 0.5°$

Fig.5